# EUROPEAN PATENT SPECIFICATION

(11) **EP 1 039 276 B1**
(45) Date of publication and mention of the grant of the patent: **26.05.2004**
(21) Application number: 00105834.6
(22) Date of filing: 20.03.2000
(51) Int. Cl.: G01H 9/00

(54) **Device for detecting movements of a vibrating body**
Vorrichtung zum Detektieren der Bewegungen eines vibrierenden Körpers
Dispositif pour détecter les mouvements d'un corps vibrant

(30) Priority: 22.03.1999 IT MI990574
(43) Date of publication of application: 27.09.2000
(73) Proprietor: Colleo, Carmelino, 20137 Milano (IT)
(72) Inventor: Colleo, Carmelino, 20137 Milano (IT)

(56) References cited:
- EP-A2- 0 608 993
- IT-B- 1 194 683
- US-A- 5 253 531

## Description

The present invention concerns a procedure in order to find movements of a vibrating corps, caused by seismic waves or mechanical stresses. Moreover, the invention concerns a device for the performance of such procedure.

There are detectors of seismic waves based on the mechanical amplification of the seismic tone, for example, by means of complex systems of articulate levers. Such detectors have one obvious percentage of inaccuracy, particularly as far as the real shape of the seismic wave is concerned.

In Italian patent No 1 194 683, introduced on 3 September 1980 by the same inventor, a device has been described that allows to transmit the relative information to the amplitude, to the frequency and to the shape of the movements of a vibrating corps, without establishing any mechanical or electrical connections between the above-mentioned corps and a transducer destined to find and to measure the vibrations themselves. Such device is based essentially on an experimental phenomenon, found out by the same inventor, according to which moving periodically, more or less quickly, ahead and behind along a rectilinear ideal axis, a source of visible and not visible electromagnetic radiation, a "modulation" of the flow emitted from the above mentioned source is obtained (DOPPLER EFFECT), whose amplitude, frequency and shape can be determined by means of an adapted visual display unit.

Purpose of the present invention is to supply, starting from the instructions of the aforesaid request for patent, and from the subsequent request for patent No MI99A 000574 of the 22 March 1999 by the same inventor, and effective procedure and a relatively simple device and with even remarkably reduced size, constituted from a support or stationary container, in various shapes or fashion for multiple opportunities of employment, containing all the complex photo-sensor and photo-emitter, with the possibility to insert, in the above-mentioned support, a preamplifier or amplifier and other active and passive components, as well as a protection from external radiation that might alter the yield of the electronic system itself, for example a cover or a complete protection cover.

Such is in order to find movements of a vibrating corps caused by seismic waves or mechanical stresses, thanks to which the survey of the information relating to the shape of the seismic wave or to the mechanical stress (like, for example, vibrations of critical parts of an aeroplane in every phase of the flight) is carried out without any means of mechanical connection between system of measure and phenomenon to measure, but only with a simple system of springs or compressible shocks-absorber that maintain the system oscillating, photo-sensor or photo-emitter, always in a middle position in absence of vibrations, but also in order to eliminate possible improper resonance.

The request for patent No MI99A 000574 of 22 March 1999 by the same petitioner, deals with a procedure in order to find movements of a vibrating corps caused by seismic waves or mechanical stresses, in which the relative information to such movements are transmitted to a complex detector of visible and invisible radiations, which are modulated for DOPPLER EFFECT from the movements themselves, forward and backward, along the real or virtual transmission optical axle of an electromagnetic radiations source (photo-emitter). Such a complex detector of modulated radiations comprises at least a photo-sensor (photo-detector), an amplifier and a visual display apparatus, and/or a recorder according to the need, for the generation and the treatment of the corresponding electric signal, photo-sensor and photo-emitter being opposite to each other according to an axle and being one oscillating and the other fixed to the above-mentioned support.

Moreover, the aforesaid patent request deals with a device in order to reveal movements of vibrating corps, caused by seismic waves or mechanical stresses, comprising:
a) a support or stationary container, anchored directly or indirectly to the ground, in case of seismic jolt, or to buildings, bridges pylon at collapsing risk, or equipment, mobile means (like, for example, trains, aeroplanes, motor vehicles), in case of mechanical stress,
b) a source of visible or invisible radiations (photo-emitter), which can be, for example, constitute by a small LED or lamp of whichever type fed in by direct current and of constant intensity,
c) a photo-sensor (for example a photo-diode valve or a photo-transistor). The photo-sensor and the photo-emitter are opposite to each other according to an axle and one oscillates and the other is fixed to such support, and
d) an electronic preamplifier circuit in order to preamplifier every electrical signal (current or tension) coming from such photo-detector, to be used with any type of visual display and/or electronic recorder. The electronic output signal is therefore elaborated, for example through an oscilloscope, in order to visualize and to analyse the shape of wave corresponding to the signal.

Favourable, the electronic ouput signal can be applied to a programmed electronic computer, including one recording unit, to one or more channels, to record the electronic signal in function of the time.

The device object of the present invention is now described in details for a better interpretation, with reference to the annexed designs which represent, for a purpose of not restrictive examples and in a substantially schematic shape of principle, four simple and fundamental realisations of the device itself. In the above-mentioned designs:
- fig No 1 is a plant view of the device according to the invention
- fig No 2 is a plant view according to arrows A-A of fig No 1
- fig No 3 is a section view according to line III III of fig No 4
- fig No 4 is a plant view on the direction of arrow IV of fig No 3
- fig No 5 is a longitudinal section view according to line V - V of fig No 6
- fig No 7 is a plant view of the last version of the device
- fig No 8 is a section view according to line VI - VI of fig No 7
- fig No 9 is a view in section of the line VII - VII of fig 7.

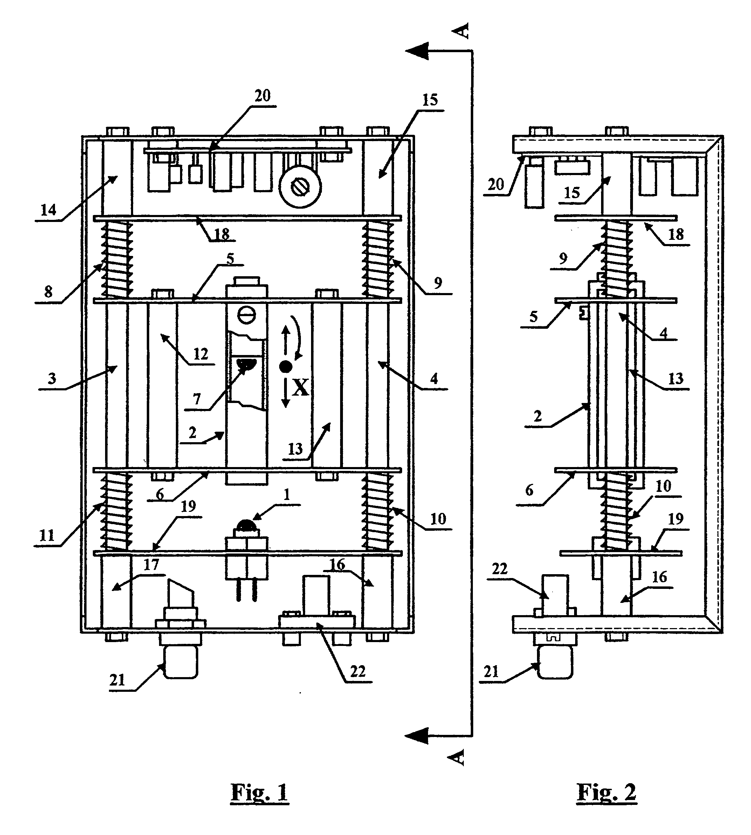

Fig No 1 represents in plant a device for the performance of the procedure according to the invention, in which the source of the electromagnetic radiations, indicated as 1, is in this case directly connected to a rigid container, subject to vibrations. In the same figure, in the central zone of the container it is indicated a mobile group, constituted from two flanges 5 and 6, two spacers of fixing 12 and 13 and from cylinder 2, which acts as a support to photo-sensor 7. Such group is flowing on two cylindrical pole, tempered and with lapping, indicated with 3 and 4. These pole are fixed to the container through ears-ring 14, 15, 16, 17 and are kept firm and parallel between them by means of flanges 18 and 19. The mobile mentioned group can slide only longitudinally, forward and backward (sees arrows X), in the direction of the source of electromagnetic radiations 1. Four helicoidal springs, 8, 9, 10, 11, concur to make a slight and adequate compression, in order to keep centred the mobile equipment in a rest position. Moreover, the device comprises a printed circuit, marked with 20, that can be a preamplifier or an amplifier, or both, according to the purpose. In the present case it is fixed to one wall of the container. However, the referred printed circuit can be gained from one or both flanges 18 and 19, as well as from one or both mobile flanges 5 and 6. The fig. 2 is a view in direction of arrows A-A of fig. 1.

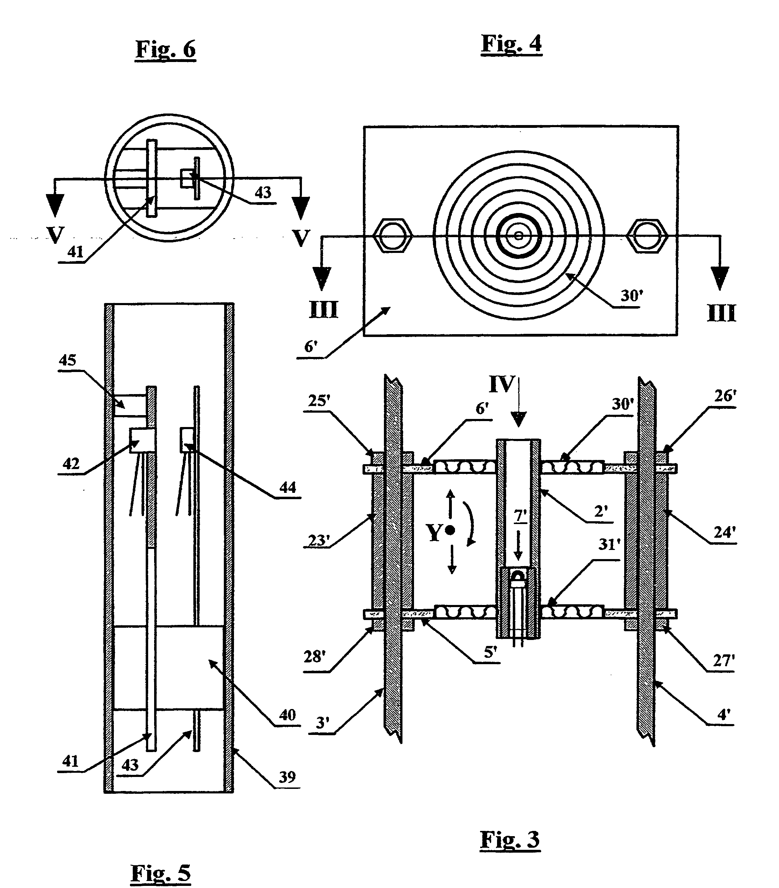

In a simplified version, as the fig. 3 shows (view in section according to line A-A of fig. 4), the equipment than in the version according to figures 1 and 2 is constituted by flanges 5 and 6 held from spacers 12 and 13 and carrying the cylinder 2 with annexed photo-sensor 7 - is not free to slide along the two pole lapped, but the two flanges are fixed on two pulling threaded, indicated with 3' and 4' in fig. 3, through two ears-ring spacers 23' and 24' and four dices 25', 26', 27', and 28'. Such flanges 5', 6' are fortified by two elastic targeting peaces, 30' and 31', that allow the cylinder 2', containing photo-sensor 7', to oscillate longitudinally in the direction of the arrows Y, that is to get close and to take off alternatively against the photo-emitter.

Fig. No 4 represents in plant one of the two flanges, the one indicated as 6', elastic targeting 30'.

An other version, economic and less cumbersome, is represented in figures 5 and 6, that are respective a view in longitudinal section and a view in plant.

In cylinder 39 a support 40 is inserted, that supports a rigid blade 41 with a photo-emitter 42 and a flexible blade 43, to which a photo-sensor 44 is fixed. To the inside of this small container 39 is also possible to insert some passive electronic components, transistors and/or operational for a pre-amplification of the signal notice from the photo-sensor.

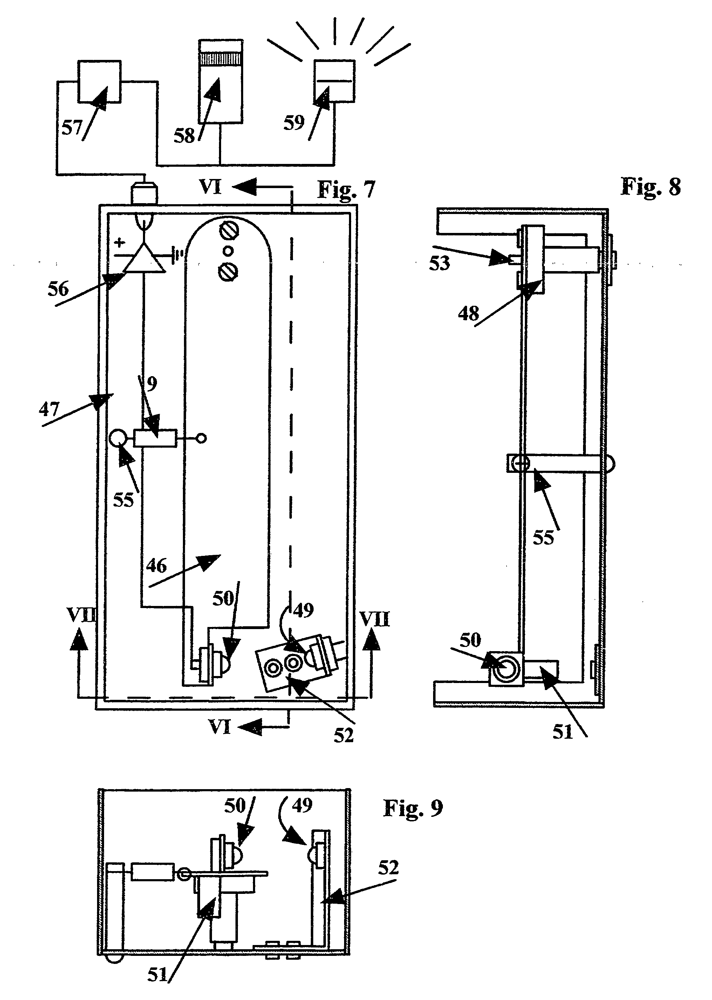

The attached designs (fig. 7, 8, 9) table 3-3 are come here described together: this is a better version of the device for seismic jolt.

More precisely, such version is realized in container 47 from rigid lever 46 untie in the point of support by means of hinge 48, constituted from an ear-ring with flange, free to rotate on the hinge 53, or whichever other way that allows lever 46 to slowly oscillate like a pendulum, only in the direction, forward and backward, against photo-emitter 49, like in this case, where photo-sensor 50 is mobile on oscillating lever 46.

Vice versa, if photo-sensor 50 in square 52 is kept fixed, photo-emitter 49 oscillates on lever 46. Such seismic-vibrometer can work also for wincing jolt, equipped with an appropriate spring 54, tied to hinge 55, that holds lever 46 in a perfectly horizontal equilibrium. In this position ballast 51 might not be necessary; it might instead be useful in the vertical position of container 47. Every seismic jolt or mechanical stress, in every type of seismic vibrometer described in this patent, causes an electrical impulse that adequately amplified, can be applicable to a programmed electronic computer, comprising an unit to record the signal in function of the time, and, moreover, allows through a switch 57, or similar device, the ignition of a sonorous alarm, for example buzzer 58, and/or visual, for example luminous indicator 59, as a signal of warning of possible dangerous situations, like the landslide danger or other possible disasters.

Naturally, numerous variations can in practice being brought with reference to what described and illustrated only as an example, without for this leaving the context of this invention.

Therefore, for example, the procedure and the device according to this invention can also be used to count the impulses determined from whichever type of mechanical impulses.

Moreover, the device according to this invention is used in combination with other similar devices, when the vibrations are manifested in directions which differ from the space.

## Claims

1. Device for detecting the movements of a vibrating body caused from seismic waves or mechanical stresses, including the following parts:
- a source of electromagnetic waves or photo-emitter (1, 42, 49), which can be, for example, constituted by a small LED or lamp of whichever type, fed by direct current and of constant Intensity,
- a photo-sensor (7, 7', 44, 50), as an example a photo-diode valve, a photo-transistor or a photo-resistor, and
- a preamplifier electronic unit circuit (20), in order to pre-amplify any electrical signals, current or voltage, coming from the aforesaid photo-sensor, to be used with any type of visual display and / or electronic recorder,
**characterised in that**
the above-specified parts (1, 42, 49; 7, 7', 44, 50; 20) are arranged in a stationary stand or case, fixed to the ground, in case of monitoring of seismic jolt, or to buildings, bridges, pylon to collapse risk, or equipment, mobile means, like for example trains, aeroplanes, motor vehicles, in case of monitoring of mechanical stress,
**in that**
the said photo-sensor and the said photo-emitter are opposite to each other according to an axle and one can move or oscillate and the other is fixed to the above-said stationary stand or case according to a predetermined arrangement, in order to maintain the photo-sensor and the photo-emitter always stationary and aligned each other in absence of vibrations,
and **in that**
in case of vibrations of the said stationary stand or case due to seismic waves or mechanical stresses, one of the above-said photo-sensor and photo-emitter moves or oscillates with respect to the other and a corresponding electrical signal coming from the above-said photo-sensor and pre-amplified through the above-said preamplifier electronic unit circuit is applied to an signal output of the above-said stationary stand or case to be used with any type of visual display and/or electronic recorder, and/or with a sonorous alarm device, as a buzzer (58), and/or a visual alarm device, for example a luminous lamp indicator (59), as a warning of collapses or other possible situations of danger.

2. Device according to claim 1, **characterised by**:
- a rigid housing connected to the vibrating body, said housing comprising two parallel fixed guides (3, 4);
- a structure (2) slidably mounted to said two parallel guides (3, 4), said structure being kept in a center rest position on the two parallel guides (3, 4) by spring means (8, 9, 10, 11);
- a photo-emitter (1) mounted to one of said rigid housing and said slidable structure;
- a photo-sensor (7) mounted to the other of said rigid housing and slidable Structure, said photo-emitter (1) and said photo-sensor (7) being aligned on their common optical axis (X) opposite to each other such that vibration induced relative movements between the photo-emitter (1) and the photo-sensor (7) along the optical axis (X) are detected by the photo-sensor (7) and a preamplifier circuit (20) for pre-amplifying the electrical signals coming from said photo-sensor (7).

## Patentansprüche

1. Vorrichtung zum Erkennen der Bewegungen eines schwingenden Körpers, die durch seismische Wellen oder mechanische Belastungen verursacht werden, wobei die Vorrichtung folgende Teile enthält:
- eine Quelle elektromagnetischer Wellen oder einen Fotoemitter (1, 42, 49), wobei es sich beispielsweise um eine kleine LED oder Lampe eines beliebigen Typs, gespeist durch Gleichstrom und von konstanter Intensität, handeln kann,
- einen Fotosensor (7, 7', 44, 50), beispielsweise ein Fotodiodenventil, ein Fototransistor oder ein Fotowiderstand, und
- einen Vorverstärker-Elektronikschaltkreis (20) zur Vorverstärkung elektrischer Signale, Strom oder Spannung, die von dem Fotosensor kommen und durch einen beliebigen Typ einer visuellen Anzeige und/oder eines elektronischen Aufzeichnungsgerätes genutzt werden,
**dadurch gekennzeichnet, dass**
die oben genannten Teile (1, 42, 49; 7, 7', 44, 50; 20) in einem stationären Gestell oder Behälter untergebracht sind, wobei das Gestell oder der Behälter im Boden verankert wird, falls seismische Stöße beobachtet werden sollen, oder an Gebäuden, Brücken oder Pylonen befestigt wird, bei denen Einsturzgefahr besteht, oder an technischer Ausrüstung oder Verkehrsmitteln angebracht wird, wie beispielsweise Züge, Flugzeuge oder Kraftfahrzeuge, falls mechanische Belastungen beobachtet werden sollen,
und **dadurch gekennzeichnet, dass**
der Fotosensor und der Fotoemitter einander auf einer Achse gegenüber stehen, wobei der eine sich bewegen oder oszillieren kann und der andere fest an dem stationären Gestell oder Behälter angebracht ist, und zwar entsprechend einer zuvor festgelegten Anordnung dergestalt, dass der Fotosensor und der Fotoemitter immer stationär und aufeinander ausgerichtet gehalten werden, solange keine Schwingungen anliegen,
und **dadurch gekennzeichnet, dass**
im Fall von Schwingungen des stationären Gestells oder Gehäuses infolge seismischer Wellen oder mechanischer Belastungen entweder der Fotosensor oder der Fotoemitter sich relativ zum anderen bewegt oder oszilliert und ein entsprechendes elektrisches Signal, das von dem Fotosensor ausgeht und durch den Vorverstärker-Elektronikschaltkreis vorverstärkt wird, an einen Signalausgang des stationären Gestells oder Behälters angelegt wird, um von einem beliebigen Typ einer visuellen Anzeige und/oder eines elektronischen Aufzeichnungsgerätes und/oder von einer akustischen Alarmeinrichtung wie beispielsweise einem Summer (58) und/oder einer visuellen Alarmeinrichtung wie beispielsweise einer Anzeigelampe (59) als Warnung vor einer Einsturzsituation oder sonstigen denkbaren Gefahrensituationen benutzt zu werden.

2. Vorrichtung nach Anspruch 1, **gekennzeichnet durch**:
- ein starres Gehäuse, das mit dem schwingenden Körper verbunden ist, wobei das Gehäuse zwei befestigte parallele Führungen (3, 4) aufweist,
- eine Konstruktion (2), die gleitfähig an den beiden parallelen Führungen (3, 4) angebracht ist und die **durch** Federmittel (8, 9, 10, 11) in einer mittigen Ruheposition an den beiden parallelen Führungen (3, 4) gehalten wird,
- einen Fotoemitter (1), der entweder an dem starren Gehäuse oder an der gleitfähigen Konstruktion angebracht ist,
- einen Fotosensor (7), der an dem starren Gehäuse angebracht ist, wenn der Fotoemitter an der gleitfähigen Konstruktion angebracht ist, oder der an der gleitfähigen Konstruktion angebracht ist, wenn der Fotoemitter an dem starren Gehäuse angebracht ist, wobei der Fotoemitter (1) und der Fotosensor (7) auf ihrer gemeinsamen optischen Achse (X) einander gegenüber aufeinander ausgerichtet sind, dergestalt, dass **durch** Schwingungen induzierte relative Bewegungen zwischen dem Fotoemitter (1) und dem Fotosensor (7) entlang der optischen Achse (X) **durch** den Fotosensor (7) erkannt werden, und
- einen Vorverstärkerschaltkreis (20) zum Vorverstärken des elektrischen Signals, das von dem Fotosensor (7) ausgeht.

## Revendications

1. Appareil de détection des mouvements d'un corps en vibration dus à des ondes sismiques ou des contraintes mécaniques, incluant les pièces suivantes :
- une source d'ondes électromagnétiques ou un photoémetteur (1, 42, 49) qui peut être par exemple constitué d'une petite DEL ou lampe de n'importe quel type, alimentée par du courant direct et d'intensité constante,
- un photocapteur (7, 7', 44, 50), à titre d'exemple une valve à photodiode, un phototransistor ou une photorésistance, et
- un circuit d'unité électronique à amplificateur (20) afin de préamplifier tous signaux électriques, de courant ou de tension, provenant du photocapteur précité, à utiliser avec n'importe quel type d'afficheur visuel et/ou enregistreur électronique,
**caractérisé en ce que**
les pièces spécifiées ci-dessus (1, 42, 49 ; 7, 7', 44, 50 ; 20) sont installées dans un état ou une position stationnaire, fixées au sol en cas de contrôle de secousses sismiques, ou à des bâtiments, des ponts, des pylônes pour le risque d'effondrement, ou à des équipements, des moyens mobiles, comme par exemple des trains, des aéroplanes, des véhicules à moteur en cas de contrôle de contraintes mécaniques,
**en ce que**
ledit photocapteur et ledit photoémetteur sont opposés l'un à l'autre suivant un axe et qu'un peut bouger ou osciller et que l'autre est fixé à l'état ou à la position ci-dessus évoqués suivant une installation prédéterminée, afin de maintenir le photocapteur et le photoémetteur toujours stationnaires et alignés l'un par rapport à l'autre en l'absence de vibrations,
et **en ce que**,
en cas de vibrations du dit état ou de ladite position dues à des ondes sismiques ou à des contraintes mécaniques, un des dits photocapteur et photoémetteur bouge ou oscille par rapport à l'autre et qu'un signal électrique correspondant provenant du dit photocapteur et préamplifié par ledit circuit d'unité électronique à préamplificateur est appliqué à une sortie de signal du dit état ou de ladite position stationnaire à utiliser avec tout type d'afficheur visuel et/ou d'enregistreur électronique, et/ou avec un appareil d'alarme sonore, comme un vibreur (58) et/ou un appareil d'alarme visuelle, par exemple un indicateur à lampe lumineuse (59) en tant qu'alerte pour des effondrements ou autres situations de danger possibles.

2. Appareil selon la revendication 1, **caractérisé par** :
- une enceinte rigide connectée au corps en vibration, ladite enceinte comprenant deux guides parallèles fixes (3, 4) ;
- une structure (2) montée de manière coulissable sur les deux dits guides parallèles (3, 4), ladite structure étant maintenue dans une position de repos centrale sur les deux guides parallèles (3, 4) par des moyens à ressort (8, 9, 10, 11) ;
- un photoémetteur (1) monté sur l'une des deux de ladite enceinte rigide et de ladite structure pouvant coulisser,
- ledit photoémetteur (1) et ledit photocapteur (7) étant alignés sur leur axe optique commun (X) l'un à l'opposé de l'autre, de manière à ce que les mouvements relatifs induits par les vibrations entre le photoémetteur (1) et le photocapteur (7) le long de l'axe optique (X) soient détectés par le photocapteur (7) et un circuit à pré-amplificateur (20) servant à préamplifier les signaux électriques provenant du dit photocapteur (7).
